# NEW EUROPEAN PATENT SPECIFICATION

(11) **EP 0 406 840 B2**
(45) Date of publication and mention of the opposition decision: **16.01.2002**
(45) Mention of the grant of the patent: 01.06.1994
(21) Application number: 90112788.6
(22) Date of filing: 04.07.1990
(51) Int. Cl.: B60M 1/20

(54) **Cantilevered bracket structure to support the overhead electric contact line for railways**
Freitragende Gabelanordnung zur Aufhängung einer elektrischen Kontaktfreileitung für Eisenbahnen
Structure de fourche en porte à faux pour supporter la ligne aérienne de contact électrique pour chemins de fer

(30) Priority: 05.07.1989 IT 2110789
(43) Date of publication of application: 09.01.1991
(73) Proprietor: A. Salvi & C. S.p.a., I-20157 Milano (IT)
(72) Inventor: Tufari, Aldo, I-20157 Milano (IT)
(74) Representative: Faggioni, Giovanmaria, Dr.

(56) References cited:
- US-A- 3 889 788
- Elektrische Bahnen, Heft 10/1986, S.298-306

## Description

The present invention concerns a suspension bracket structure for the overhead electric contact line of railways. It is known that these electric lines consist of one or more messenger cables - normally taking up a catenary type configuration - and of one or more contact wires or conductors, suspended to the messenger cable or cables through a plurality of hangers, positioned at regular intervals.

The messenger cables and the contact wires are in turn supported by way of suitable brackets onto the fixed standards of the line, which mostly consist of poles or portals when the line is overground, or of hangers fixed directly to the tunnel vault when the line is underground.

A known drawback of these brackets lies in the fact that, in order to stand in the long run the high stresses to which they are subjected - both mechanical, due to the oscillations undergone by the line at each train passage, and environmental, due to the aggressive action of atmospheric agents - they involve quite a heavy and costly structure. Normally, these brackets are in fact made of galvanized iron or, according to more recent proposals, of stainless steel. (See GB-A-1313609)

From an article "Einsatz von Aluminium für die Oberleitung der Neubaustrecken der Deutschen Bundesbahn", published in Elektrische Bahnen eb, iss. 84, vol. 10, pp. 298 ― 304, 1986, it has already been known in a suspension bracket structure of the kind in question to provide simply shaped elongated pieces (rods, tubes), made from extruded aluminium, which are connected by connecting elements of a more complicated structure, the latter made from aluminium by casting. The disadvantage of such a construction, in which only the elongated pieces of rather simple, rod-like structure consist of extruded aluminium, is that the connecting elements made by casting are costly to manufacture and are not sufficiently strong for the purposes in question if not excessive material is used, thereby leading to cost and weight problems.

The present invention proposes to adopt brackets essentially made of aluminium and/or its alloys. The advantage of using aluminium can be understood at once, taking into account its high technological characteristics, combined with a reduced specific weight, and its high resistance to atmospheric agents.

On the other hand, it is practically impossible to realize aluminium brackets with the same technology used for iron or steel brackets, for the following main reasons:
- the pieces of special shape, as connection members, clamps and/or joints, are currently produced of cast iron or of pressed steel; but using the casting technique on aluminium does not guarantee sufficiently high and uniform characteristics of strength. On the other hand, adopting the aluminium pressing technique leads to exceedingly high costs of the parts thus produced and, again, it provides no sufficient warranties;
- the idea of obtaining the connection between different aluminium parts with the welding technique - seen the difficulty of this technique - equally provides no sufficient warranties of uniformity of production, and in any case this technique is normally not allowed by Railway Specifications.

The object of the present invention is therefore to propose a new bracket structure to support an overhead electric railway contact line - particularly a bracket structure making use of aluminium or its alloys - apt to overcome the aforementioned drawbacks, for the fact that it can be realized with a technique which particularly suits this metal.

Another object of the invention is to propose a simple, light, and yet very strong bracket structure, particularly suited for so-called high-speed railway lines.

A still further object of the invention is to propose a bracket structure for railway tunnels, particularly a bracket structure apt to be housed into the extremely limited space between the vault of a small monorail tunnel of old construction, and the clearance gauge of a modern locomotive.

These objects are achieved, by the features of the characterising part of the independent claim 1.

The dependent claims 2 and 3 define further embodiments of the invention.

Further characteristics and advantages of the bracket structure according to the invention will anyhow be more evident from the following detailed description of some preferred embodiments thereof, given by way of example and illustrated on the accompanying drawings, in which:
Fig. 1 is a side assembly view of a bracket structure according to the invention, suited for a high-speed railway line;
Figs. 2 to 9 are cross section views of a series of extruded section pieces forming shaped bodies used in the embodiment of figure 1;
Fig. 10 is a side assembly view of a bracket structure according to the invention, to be mounted in small railway tunnels of old construction;
Fig. 11 is a diagrammatic partial plan view of the bracket structure of figure 10;
Fig. 12 shows in further detail some parts of the bracket structure of figure 10; and
Fig. 13 is a diagrammatic section view along the line A-A of figure 12.

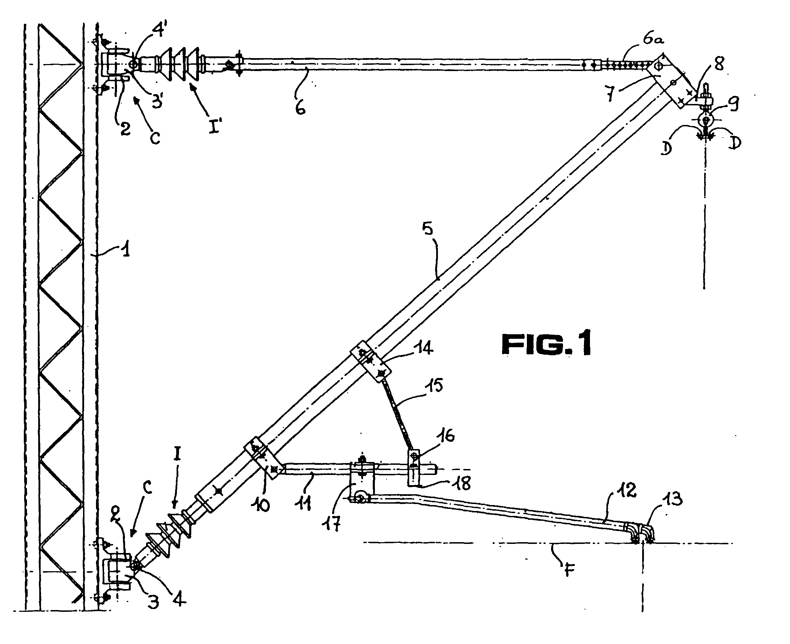

The bracket structure according to the invention - in the embodiment shown in fig. 1 which is particularly suited, as said, for high-speed railway lines - comprises first of all a vertical support upright 1, which forms part of a known (and thus not illustrated) pole or portal structure. On the upright 1 there are fixed two hinge elements C in two positions reciprocally spaced in height. Each hinge element C comprises a support base 2 fixed to said upright 1 and carrying a vertical pin onto which is mounted oscillating a connection element 3.

On the connection element 3 of the lower hinge C there is anchored, with possibility to oscillate about a horizontal pin 4, a main strut 5 of the bracket structure; while on the connection element 3' of the upper hinge C there is anchored a tie rod 6, also by means of a horizontal pin 4'.

At its end close to the hinge C the strut 5 comprises an electric insulator I, while on its end far from the hinge C there is fixed a junction body 7; this latter performs, on one hand, the function of connecting the strut 5 to the tie rod 6 and, on the other hand, the function of carrying a support hanger 8 for the suspension clamp 9 of the pair of messenger cables D of the electric line.

Also the tie rod 6 comprises at its end close to the hinge C an electric insulator I', while its opposite end extends into an adjusting rod 6a having different positions of connection.

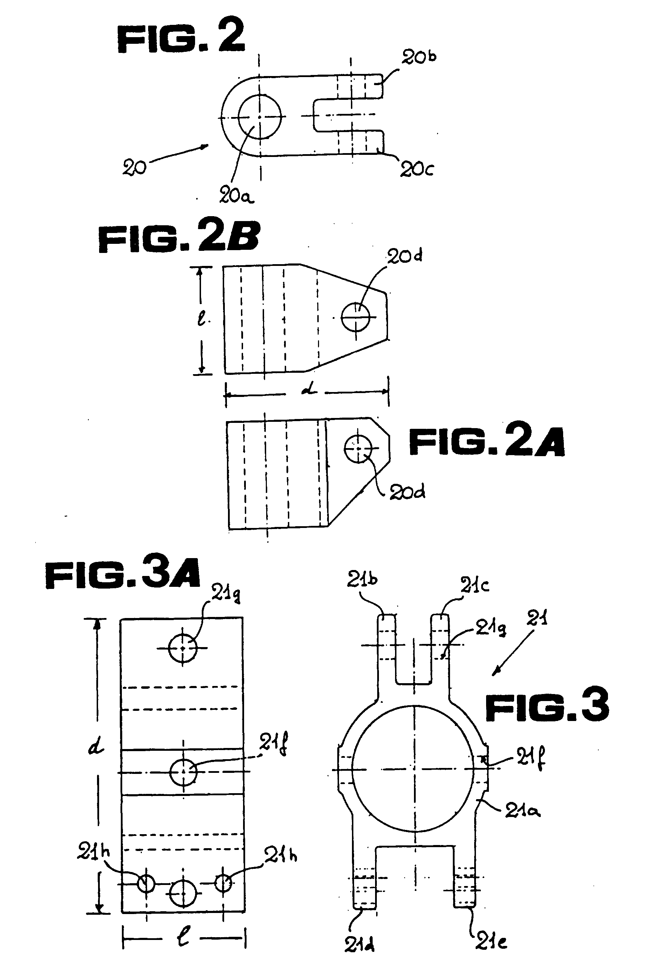

According to a fundamental characteristic of the present invention, the main elements described so far - marked by reference numbers 2, 3, 3', 5, 6, 7 and 8 - are obtained from extruded aluminium sections. More precisely, in the case of elements 5 and 6, they consist of elongated lengths or pieces of round tubular sections. Whereas, in the case of elements 2, 3, 3', 7 and 8, they are short lengths or pieces cut down from the extruded section and having a length which is generally shorter than the transversal dimension of the section; as can be easily understood, these short pieces take up the shape of prismatic bodies - or better, of right prisms - having as base the shape of the aluminium section. For what concerns the shape of the cross section of these elements, the same will be described hereinafter with reference to figures 2 to 4.

On the strut 5 there are also fixed, at a reciprocal distance, a first anchor and hinge clamp 10 for an adjusting rod 11 having the function to support, in a position adjustable along its length, the steady braces of polygon 12, 13, and a second anchor and hinge clamp 14 for a connecting rod 15, the other end of which is hinged onto a third connection clamp 16, fixed at the free end of said adjusting rod 11. The function of said connecting rod 15 is to keep said adjusting rod 11 in an adjusted position, by supporting it at its end opposite to the clamp 10.

The adjusting rod 11 is thus kept in a substantially horizontal position, and on it there is mounted - in a position adjustable along its length - a fourth clamp 17 to which there are anchored the ends of the steady braces of polygon 12, 13. At their opposite free end these braces 12, 13, carry wires (not shown) of the electric line, by way of known coupling means.

To the lower surface of said third clamp 16 there is associated an amplitude limiter, essentially in the form of a stop plate 18. In case of an excessive upward oscillation, said braces 12, 13, bear directly against said plate 18.

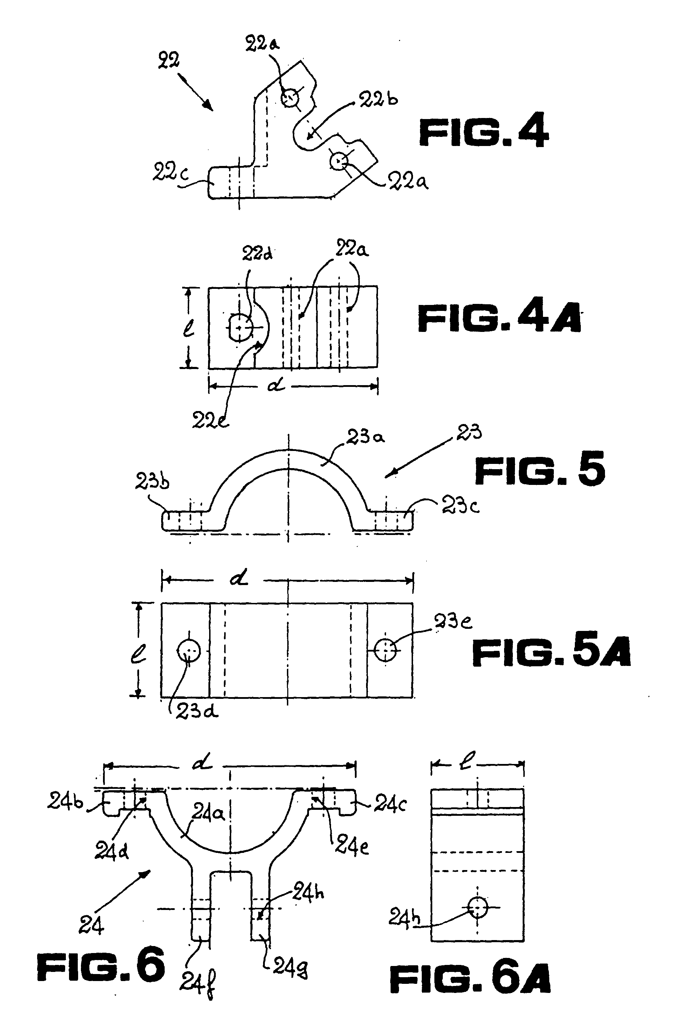

Also the elements 10, 14, 16 and 17 are formed - according to the fundamental teaching of the present invention - as shaped bodies from short pieces of extruded aluminium sections. The shape of these elements will be better described hereinafter with reference to figures 5 to 9.

A technician skilled in the art will note at once that - unlike known technique, in which both the adjusting rod 11 and the steady braces of polygon 12, 13, are substantially suspended to tie rods or connection wires - the bracket according to the invention has an essentially stiff structure, which is extremely suited for use on high-speed railway lines: the adjusting rod 11 is in fact connected to the strut 5 through the connecting rod 15, and the oscillation of the braces 12, 13, is strictly limited by the stop plate 18.

As already said, figures 2 to 9 show different shapes of extruded aluminium sections, which are particularly suited to form the specially shaped bodies of part of the component elements of the bracket structure, according to the fundamental principle of the present invention.

The extruded section 20 - having a cross section as shown in fig. 2 - is used to form the connection elements 3, 3', of the hinge elements C. As seen, the section 20 is essentially fork-shaped, with a cylindrical longitudinal hole 20a formed into the base of the fork and two parallel branches 20b and 20c. The section 20 is cut into short pieces - as those illustrated in figs. 2A and 2B - the length I of which is shorter than the major transversal dimension d of said section; to complete the shaped body, the branches 20b and 20c are beveled and transversal holes 20d are formed into the same. The hole 20a is used to house the vertical pin (not shown in detail) of the hinge C, while the horizontal pins 4, 4', are housed into the two transversal coaxial holes 20d. In fig. 2B the section branches have a symmetrical bevel cut so as to form the element 3', while in fig. 2A the bevel cut is formed only on one side so as to obtain the element 3 in the shape shown in figure 1.

The extruded section 21 - having a cross section as shown in fig. 3 - is used to form the junction body 7 fixed at the end of the strut 5. As seen, the section 21 comprises a tubular central part 21a from which project, in diametrally opposite directions, two pairs of parallel branches 21b, 21c and, respectively, 21d, 21e. The section 21 is cut into short pieces - as illustrated in fig. 3A - the length I of which is shorter than the major transversal dimension d of said section; to complete the shaped body, a transversal hole 21f is formed along the diameter of its tubular part 21a, and transversal holes 21g, 21h, are formed in correspondence of its branches. Into the axial hole of the central tubular part 21a is fitted with precision the end of the strut 5, which is fixed by a bolt or pin crossing the transversal hole 21f. Between the pair of branches 21b, 21c, is fitted the end of the adjusting rod 6a - forming an extension of the tie rod 6 - which is fixed by a bolt crossing the holes 21g. Between the pair of branches 21d, 21e, is instead fitted the support hanger 8, which is fixed by a pair of bolts crossing the holes 21h; this pair of bolts is apt to stand also the torsional stresses undergone by the hanger 8.

Also said hanger 8 is obtained starting from an extruded section, and precisely the section 22 with cross section as shown in fig. 4. As seen, the section 22 is more or less L-shaped, and consists of a main body having a pair of longitudinal holes 22a and a recess 22b, and of a projection 22c. The section 22 is cut into short pieces, as illustrated in fig. 4A, the length I of which is shorter than the major transversal dimension d of the section; to complete the shaped body, the projection 22c is provided with a transversal hole 22d which is not fully circular, while a circular undercut 22e is formed coaxially to the hole 22d. The holes 22a are used to let through the cited bolts crossing the holes 21h of the junction body 7, while the transversal hole 22d houses the suspension clamp 9.

The extruded section 23 - with cross section as shown in fig. 5 - is used in combination with the extruded section 24 - with cross section as shown in fig. 6 - to obtain the anchor clamps 10 and 14. As seen, the section 23 is essentially shaped as a half-ring 23a, with two diametrally opposed coplanar projections 23b, 23c; while the section 24, as well as having a half-ring-shaped body 24a with diametrally opposed coplanar projections 24b, 24c, also comprises two side-by-side parallel branches 24f, 24g, extending from the half-ring 24a in a direction perpendicular to the projections 24b, 24c. The sections 23 and 24 are cut into short pieces - as those illustrated in figs. 5A and 6A - of equal length I, which is shorter than the major transversal dimension d of the section; to complete the two respective shaped bodies, one simply forms transversal holes 23d, 23e, into the projections 23b, 23c, and holes 24d, 24e, into the projections 24b, 24c, as well as holes 24h into the branches 24f and 24g. The shaped bodies thus obtained are joined together, so that the respective half-rings embrace the strut 5, and are tightened onto said strut 5 by means of bolts crossing the holes 23d, 24d, and respectively 23e, 24e, which holes coincide. The holes 24h are instead used to house through bolts, acting as retention and pivoting pins for the adjusting rod 11 and the connecting rod 15.

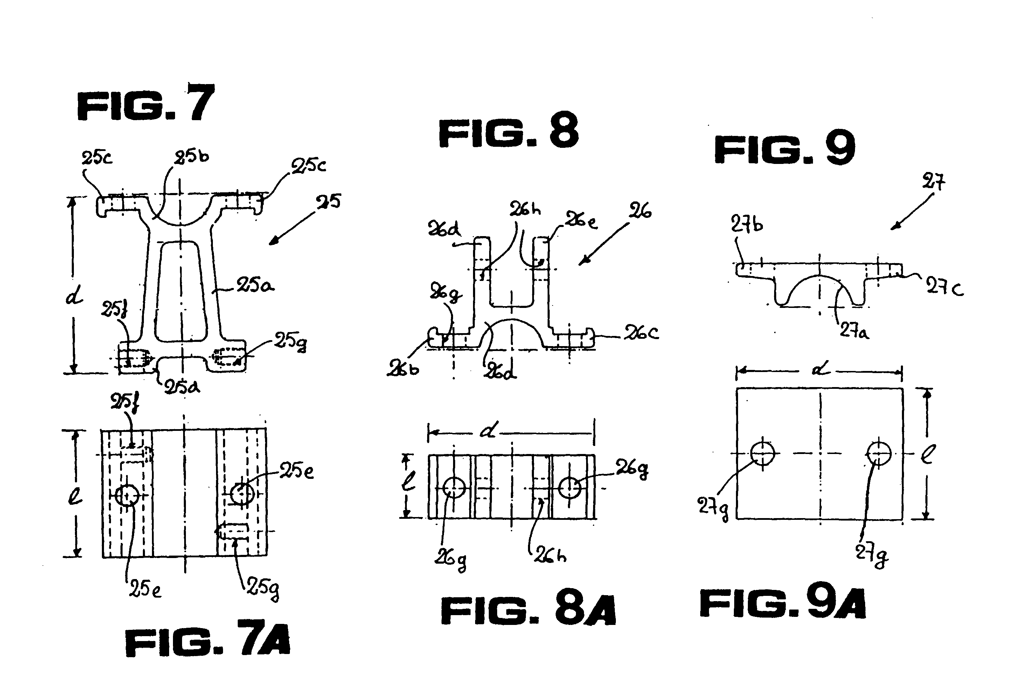

The extruded section 25 - with cross section as shown in fig. 7 - is used to form the anchor clamp 17, in combination with a shaped body obtained from a section fully similar to that shown in fig. 5, save for its different dimensions. As seen, the section 25 is essentially H-shaped and has a central box-like body 25a ending at the top with a half-ring 25b, extending into two diametrally opposed coplanar projections 25c, and at the bottom with a widened base 25d. The section 25 is cut into short pieces - as those illustrated in fig. 7A - the length I of which is shorter than the major transversal dimension d of the section; to complete the shaped body, the projections 25c are provided with transversal holes 25e, while the base 25d is provided with threaded dead holes 25f, 25g, symmetrically offset (see fig. 7A) in respect of the transversal median line of the base 25d. The shaped body thus obtained is coupled with a shaped piece similar to that shown in fig. 5, so that the respective half-rings 25b and 23a embrace the adjusting rod 11 and can be tightened onto this letter by means of bolts crossing the holes 25e of the projections 25c and, respectively, the holes 23d, 23e of the projections 23b, 23c. On the other hand, into the offset threaded holes 25f, 25g, engage the threaded ends of suspension rings (not shown in detail) onto which are anchored the steady braces of polygon 12 and 13. As can easily be seen, thanks to the simple offset arrangement of the holes 25f and 25g, the correct reciprocal displacement of the braces 12 and 13 is obtained.

The extruded section 26 - with cross section as shown in fig. 8 - and the extruded section 27 - with cross section as shown in fig. 9 - are used to form the anchor clamp 16. As seen, the section 26 - which is besides very similar to the section 24 of fig. 6, except for having different dimensions - comprises a half-ring 26a, two diametrally opposed coplanar projections 26b, 26c, extending from the ends of the half ring, and two side-by-side parallel branches 26d, 26e, projecting from the centre of the half-ring. The section 27 is instead formed as a half-ring 27a, with two projections 27b, 27c, extending from its back central part and forming altogether a flat surface. The sections 26 and 27 are cut into short pieces - as those illustrated in figs. 8A and 9A - of equal length I, which is shorter than the major transversal dimension d of each of said sections. To complete the shaped bodies, forming together the clamp 16, the projections 26b and 26c of the section 26 are provided with holes 26g, which correspond to the holes 27g formed into the projections 27b and 27c of the section 27; coaxial holes 26h are moreover made into the branches 26d and 26e. These two shaped bodies are positioned on the adjusting rod 11 so that the two half-rings 26a and 27a embrace said rod and are tightened and locked thereon by means of bolts crossing the coinciding holes 26g-27g of the projections 26b-27b and 26c-27c. The holes 26h are used for housing a horizontal pivoting pin (not shown in detail) for connection to the lower end of the connecting rod 15. Furthermore, the flat surface formed by the projections 27b, 27c, represents the aforementioned stop plate 18 to limit the oscillation of the steady braces of polygon 12, 13.

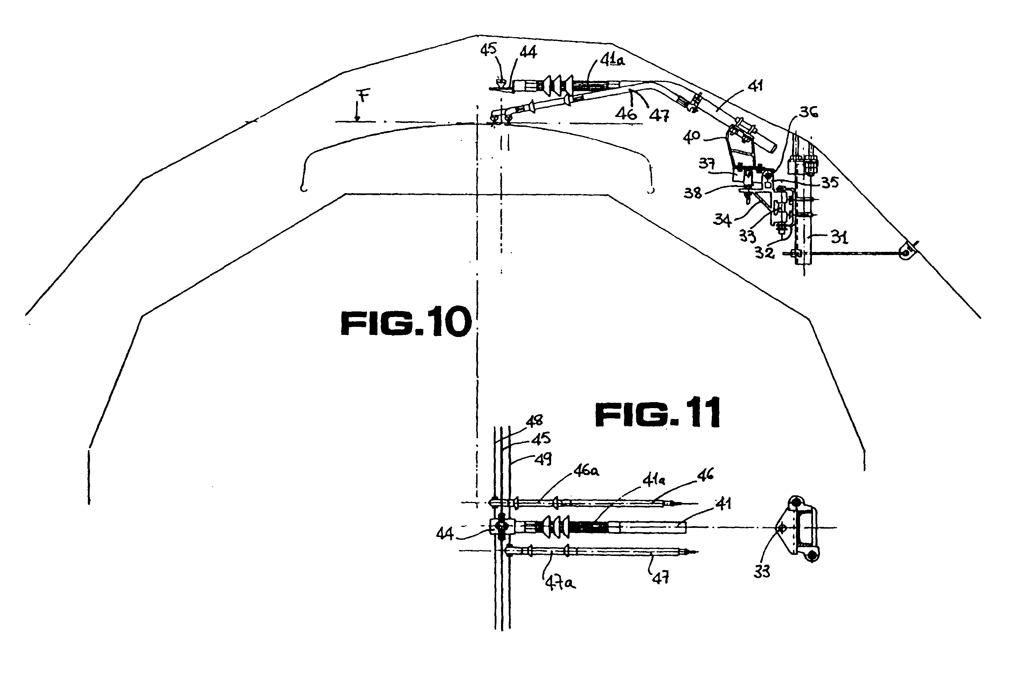

The embodiment shown in figure 10 represents instead a bracket structure particularly designed for small railway tunnels, especially old tunnels of non-electrified railway routes involving quite difficult dimensioning problems. It is known in fact that, in currently available bracket structures, the contact plane between the electric line and the pantograph of the locomotive lies at a distance from the tunnel vault which is at least of 500 mm. Now, while the modern railway tunnels fully answer these requirements, the same cannot be said for the railway tunnels of old construction, wherein electrification was not considered.

The bracket structure according to the embodiment of figure 10 is meant for use also in railway tunnels wherein the aforementioned distance can be merely of 300 mm.

As shown in figure 10, the bracket structure comprises - as already said - a vertical support upright 31, the upper end of which is anchored to the tunnel vault in a position which is laterally offset in respect of the tunnel axis, and at a level below the horizontal plane F of the contact wire of the electric line.

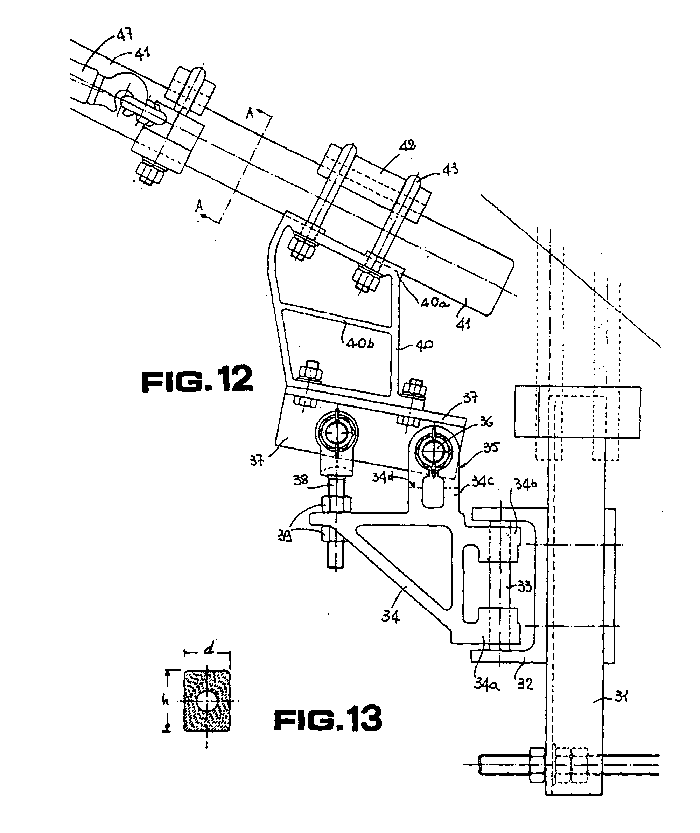

To the upright 31 there is fixed - in a position adjustable in height along the same - a hinge element with vertical axis consisting of a support base 32, for anchorage to the upright 31, of a pivoting pin 33, and of an essentially L-shaped rotary connection element 34. As better described hereinafter - and as shown more in detail in figure 12 - said connection element 34 has a pair of lateral projections 34a, 34b, by means of which it is mounted oscillating on the pin 33, as well as an upper projection 34c extending into two fork branches 35.

The rotary connection element 34 supports a rising element, essentially consisting of a crosspiece 37 and of a support and spacing block 40. The crosspiece 37, having a T-shaped section, is housed with its vertical web between the two branches 35, and has an end supported oscillating about a horizontal hinge pin 36, while the other end is supported by a push rod 38 bearing onto the connection element 34. The push rod 38, in the form of a threaded rod, is adjustable in height by means of a pair of opposed nuts 39. The arrangement is such that the crosspiece 37 is positioned at a higher level than the hinge element 32-34.

On said crosspiece 37 there is mounted said block 40, supporting the main bracket arm 41 and having essentially a spacing function. This block 40 is fixed with its lower flat surface onto the upper flat surface of the crosspiece 37 by means of bolts and nuts; the upper surface of said block is strongly inclined and is provided with a seat 40a to house the bracket arm 41.

As shown more clearly in the cross section view of fig. 13, the arm 41 has a rectangular section, the height h of which exceeds the width d, and is drilled along its axis. Its lower side is housed into the seat 40a formed into the upper surface of the block 40 and is kept laterally therein by the edges of said seat. On the upper side of the arm 41 bears a saddle 42, provided with a seat for housing said upper side, which is symmetrical to the seat 40a formed into the block 40, said saddle being anchored to said block by means of U bolts 43.

The bracket arm 41 is elbow-bent about halfway through its length: thus, a first part of the arm 41 is positioned strongly inclined upwards, resting and being firmly anchored onto the upper surface of the block 40; while a second part is positioned in an essentially horizontal direction, and extends into a bar 41a of electrically insulating material - for instance a bar of stiff fiberglass - at the free end of which is anchored the hook 44 for the messenger cable 45 of the electric line.

In correspondence of an intermediate point of said first inclined part of the arm 41 there are moreover anchored the ends of the steady braces of polygon 46 and 47, the opposite ends of which support the contact wires 48, 49, of the electric line, as shown in Fig. 11. Also the steady braces of polygon 46 and 47 consist of a first elbow-bent metal part, and of a second part 46a, 47a, formed of a bar of stiff fiberglass or of other electrically insulating material.

As can be understood from the above description, the bracket structure according to this embodiment consists of an assembly of elements which create an extremely compact structure, developing moreover in height according to a profile which is apt to follow the profile of the tunnel vault.

According to the fundamental characteristic of the invention, practically all the elements forming this bracket structure consist of shaped prismatic bodies formed from extruded section lengths of aluminium or its alloys. Their cross section can be seen at once from figure 12; in particular:
- the support base 32 consists of a channel section length, having holes for its anchorage to the upright 31 formed into the web of the channel, and holes for housing the pivoting pin 33 formed into the flanges of the channel;
- the rotary connection element 34 consists of a generally L-shaped section length, as clearly evidenced in the plane of the drawing of figure 12. To obtain the shaped body 34, the two projections 34a, 34b, extending laterally from its vertical side are provided with axial holes to form seats for housing the pivoting pin 33; furthermore, the vertically extending projection 34c is milled, parallely to the plane of the drawing, to form a notching 34d which separates the cited fork branches 35 and which is used to house the web of the crosspiece 37; the branches 35 are moreover drilled perpendicularly to the plane of the notching 34d to house the hinge pin 36 for said crosspiece 37;
- said crosspiece 37 consists of a T-shaped section length, the web of which - as already said - is housed between the two fork branches 35;
- the spacing block 40 is itself formed from a tubular section length, with two parallel chambers separated by a wall 40b, having a cross section similar to a scalene trapezium, as resulting from figure 12. The shaped body forming the block 40 is completed by a milling along its upper surface to obtain the seat 40a for housing the arm 41, and is furthermore provided with a series of transversal holes to let through the bolts of anchorage to the crosspiece 37 and, respectively, the U bolts 43; finally,
- the bracket arm 41 is formed, as already said, from a section length - in this case an elongated length - having a rectangular cross section with an axial central hole and with vertical major side.

As clearly results from the above description, the invention allows to realize the most varied types of bracket structures to support an electric railway contact line - like a structure of large dimensions as that shown in figure 1, for a modern high-speed railway line, or a structure of very reduced dimensions as that shown in figure 10, to satisfy the requirements of small railway tunnels of old construction - with a very simple technique and, above all, particularly suited for using aluminium and its alloys.

The fact that the invention can be applied to the two types of aforedescribed bracket structures - which are very different one from the other - is a confirmation of the concrete possibility to realize many other embodiments of such bracket structures, merely with the help of a technician skilled in the art and without of course departing from the scope of the teachings provided by the invention itself.

## Claims

1. Bracket structure to support the overhead electric contact line for railways, of the type comprising:
- a fixed vertical support upright (1,31), positioned laterally in respect of the longitudinal axis of the electric line, and
- a set of elements forming a support bracket, mounted cantilevered on said upright and projecting transversely towards said longitudinal axis, **characterized in that**,
- at least some (2,3,3',7,8,10,14,16,17;32,34,37,40) of said elements forming the support bracket consists of shaped bodies, each in the form of a prism consisting of a short piece of extruded metal section, made of aluminium or of an aluminium alloy, the length of said short piece being shorter than the major transversal dimension of the section; and **in that**,
- said shaped bodies are fixed one to the other and/or to the remaining elements of the bracket structure by screw tightening means.

2. Bracket structure as in claim 1), wherein said shaped bodies are each in the form of a right prism, the cross section of which determines the shape of the body.

3. Bracket structure as in claim 1), wherein said set of elements forming the support bracket is mounted oscillating about a vertical axis, by way of at least one hinge element fixed to said upright, at least part of said hinge element consisting of one of said shaped prismatic bodies.

## Patentansprüche

1. Trägerstruktur zum Tragen einer elektrischen Oberleitung für Eisenbahnen, von der Art mit:
- einem festen vertikalen Stützpfosten (1, 31), der seitlich neben der Längsachse der elektrischen Leitung angeordnet ist, und
- einem Satz von einen Stützträger bildenden, überragend auf dem Pfosten montierten und quer zu der Längsachse vorragenden Elementen,
**dadurch gekennzeichnet, daß**
- wenigstens einige (2, 3, 3', 7, 8, 10, 14, 16, 17; 32, 34, 37) der den Stützträger bildenden Elemente aus geformten Körper bestehen, jeweils in Form eines Prismas bestehend aus einem kurzen Stück eines extrudierten Metallabschnitts, gefertigt aus Aluminium oder einer Aluminiumverbindung bestehen, wobei die Länge des kurzen Stücks kürzer als die größere Erstreckung des Abschnitts in Querrichtung ist, und dadurch, daß
- die geformten Körper aneinander und/oder an den verbleibenden Elementen der Trägerstruktur mittels Schraubelementen befestigt sind.

2. Trägerstruktur nach Anspruch 1, wobei die geformten Körper jeweils in Form eines regelmäßigen Prismas sind, deren Querschnitt die Form des Körpers bestimmt.

3. Trägerstruktur nach Anspruch 1, wobei der Satz der den Stützträger bildenden Elemente mittels wenigstens eines an dem Pfosten befestigten Gelenkelements um eine vertikale Achse schwingend befestigt ist und wenigstens ein Teil des Gelenkelements aus einem der geformten prismatischen Körpern besteht.

## Revendications

1. Structure de fourche pour supporter la ligne aérienne de contact électrique pour chemins de fer, du type comprenant :
- un montant de support vertical fixe (1, 31) positionné latéralement par rapport à l'axe longitudinal de la ligne électrique, et
- un ensemble d'éléments formant une fourche de support, montée en porte-à-faux sur ledit montant et se projetant transversalement vers ledit axe longitudinal,
**caractérisée en ce que**,
- au moins quelques unes desdits éléments (2, 3, 3', 7, 8, 10, 14, 16, 17; 32, 34, 37) formant la fourche de support consiste en corps façonnés, chacun sous la forme d'un prisme consistant en une courte pièce de profilé de métal extrudé, en aluminium ou en alliage d'aluminium, la longueur de ladite courte pièce étant inférieure à la dimension transversale majeure du profilé; et **en ce que**,
- lesdits corps façonnés sont fixés les uns aux autres et/ou aux éléments restants de la structure de fourche par des moyens de serrage à vis.

2. Structure de fourche selon la revendication 1, dans laquelle lesdits corps façonnés ont chacun la forme d'un prisme droit, dont la section transversale détermine la forme du corps.

3. Structure de fourche selon la revendication 1, dans laquelle ledit ensemble d'éléments formant la fourche de support est monté de manière à osciller sur un axe vertical, au moyen d'au moins un élément d'articulation fixé audit montant, au moins une partie dudit élément d'articulation consistant en un desdits corps prismatiques façonnés.
